# EUROPEAN PATENT SPECIFICATION

(11) **EP 0 355 839 B1**
(45) Date of publication and mention of the grant of the patent: **06.04.1994**
(21) Application number: 89115691.1
(22) Date of filing: 25.08.1989
(51) Int. Cl.: G06K 15/12

(54) **Optical beam scanning apparatus**
Abtastvorrichtung mit optischem Strahl
Appareil de balayage à rayon optique

(30) Priority: 26.08.1988 JP 212058/88
(43) Date of publication of application: 28.02.1990
(73) Proprietor: FUJITSU LIMITED, Kawasaki-shi, Kanagawa 211 (JP)
(72) Inventor: Watarai, Shinichi c/o Fujitsu Limited, Nakahara-ku Kawasaki-shi Kanagawa 211 (JP); Kitagawa, Shunji c/o Fujitsu Limited, Nakahara-ku Kawasaki-shi Kanagawa 211 (JP); Houki, Yoji c/o Fujitsu Limited, Nakahara-ku Kawasaki-shi Kanagawa 211 (JP)
(74) Representative: Sunderland, James Harry

(56) References cited:
- US-A- 4 068 197
- US-A- 4 663 760
- US-A- 4 761 659

## Description

The present invention relates to optical beam scanning apparatus. With such apparatus a target surface is scanned by an optical beam produced by driving a light emission device, such as a semiconductor laser electrophotographic apparatus, using an optical scanning device.

An optical beam scanning device has been used in electrophotographic apparatus for a scanning beam intensity-modulated by image information.

In such optical beam scanning apparatus, the amount of light emitted from the light emission device, such as a light emission diode (LED), is required to be maintained at a predetermined level as explained below.

Namely, in such a light emission device, the intensity of an optical scanning beam is subject to change depending on the conditions of the optical scanning device and ambient temperature.

Therefore, for instance, gray level (concentration) may become uneven in an image formed in such an electrophotographic apparatus as is mentioned above.

For this purpose, arrangements have been made such that current for driving the light emission device has been set to maintain a constant optical beam intensity, on the basis of the received output of a monitor diode used to monitor optical beam light intensity from the light emission device.

US-A-4 663 760 and US-A-4 761 659 disclose such arrangements.

In those arrangements, light beam intensity is effectively sampled for a brief period of each scan. The sampled intensity is compared with a reference level. If the sampled intensity is low, the level of a driving signal is adjusted to provide greater intensity; if the sampled intensity is high, the level of the signal is adjusted to provide lesser intensity. The adjusted level of the signal employed for the whole of the relevant scan depends on the intensity as sampled during the brief period. Sampling is nor repeated until the next scan.

With such arrangements, intensity changes resulting from ambient temperature changes can be compensated.

The inventors have, however, noted that in cases in which semiconductor lasers and/or light emission diodes are used as light emission devices, such devices are subject to changes in light emitting efficiency depending on temperature at device junctions. That is, the light emitting efficiency is reduced as junction temperature becomes higher.

They have further noted that temperature at device junctions is subject to change in dependence upon the duty ratio of a video signal or a drive current.

Accordingly, they have noted that when a video signal has a large duty ratio, in the prior art, this has caused a problem in that exposure energy in the final part of a scanning line is reduced by about 10 to 20% in comparison with that in the initial part of the scanning line.

According to the present invention there is provided optical beam scanning apparatus, comprising:-
(a) a light emission device, operable to emit light for forming a light beam which is scanned in the apparatus,
(b) driving means, for applying a driving signal to the light emission device for driving that device to emit light in accordance with a control signal in the course of scanning of the light beam,
(c) compensating means, for applying to the driving means a compensating signal for compensating for a decrease in the quantity of light emitted by the light emission device at different times in response to similar levels of driving signal, so that the quantity of light emitted by the light emission device is compensated for such decrease;
   characterised in that
   the compensating means comprise:-
(d) means for estimating the decrease in quantity of light emitted by the light emission device, in response to similar levels of driving signal, as a consequence of being driven in accordance with the control signal in the course of a scanning of the light beam, and
(e) means for applying the said compensating signal to the driving means in dependence upon the estimation provided by the estimation means whilst the light emission device is being driven in accordance with the control signal in the course of the scanning of the light beam, thereby compensating continuously the quantity of light emitted by the light emission device for such decrease in the course of scanning of the light beam.

An embodiment of the present invention can provide optical beam scanning apparatus having a means operable to compensate for reduction in light emission efficiency due to heat generation at a junction of a light emission device.

An embodiment of the present invention can provide an optical scanning apparatus which provides almost or substantially equal exposure energy at the beginning of a scan and at the end of a scan of an optical beam.

An embodiment of the present invention provides an optical beam scanning apparatus comprising a light emission device, a driver for driving the light emission device in accordance with a given video signal, means for estimating reduction in light quantity of the output of the light emission device which would be experienced as a result of operation in accordance with the given video signal, and means for controlling the driver in accordance with the estimation so that the light quantity of the optical beam output from the light emission device is maintained constant or more constant.

Reference is made, by way of example, to the accompanying drawings, in which:-
Fig. 1 is a schematic diagram illustrating constitution of electrophotographic apparatus to which optical beam scanning apparatus embodying the present invention is applied,
Fig. 2 is a block diagram illustrating constitution of an arrangement for maintaining constant the light quantity provided by a light emission device at the commencements of scannings of an optical beam,
Fig. 3 is a waveform diagram, showing waveforms for assistance in explaining operations of Fig. 2,
Fig. 4 is a schematic block diagram illustrating constitution provided for an embodiment of the present invention for maintaining the quantity of light of an optical beam constant over a period from commencement to end of a scanning of the optical beam,
Fig. 5 is a detailed circuit diagram of a gate circuit, an integral circuit and a light output control circuit shown in Fig. 4,
Fig. 6 is a waveform diagram including waveforms for assistance in explaining operations of Figs. 4 and 5, and
Fig. 7 is a schematic block diagram illustrating constitution of another embodiment of the present invention.

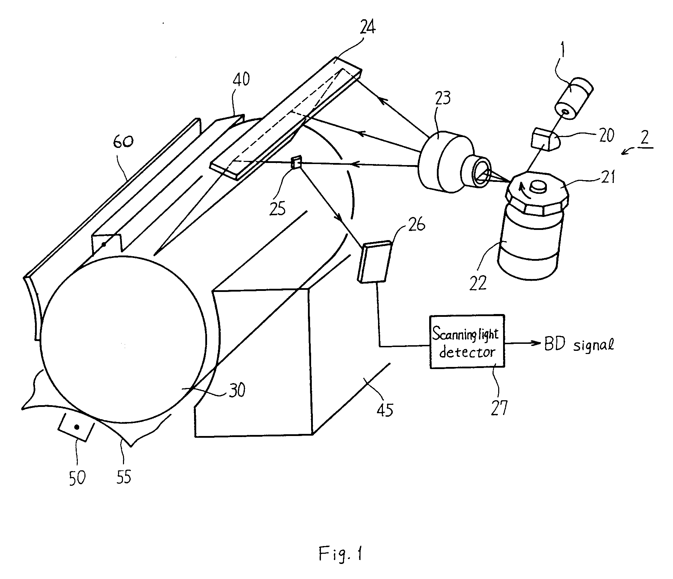

The constitution of an electrophotographic apparatus, to which an optical beam scanning apparatus in accordance with an embodiment of the present invention is applied, is schematically illustrated in Fig. 1.

In Fig. 1, an output beam from a light source 1 is scanned by a light scanning means 2 (having a constitution as described below) and irradiates a photosensitive drum 30 which is the scanning object. The photosensitive drum 30 is charged by a corona charger 40 and is scanned by the intensity-modulated optical beam to produce a latent image by exposure to the light. After the latent image is developed by a developing device 45 using toner, the toner is transferred to paper 55 by a transfer charger 50. Toner remaining on the photosensitive drum 30 is removed by a cleaning blade 60.

The light scanning means 2 comprises a cylinder lens 20, a polygon mirror 21, a spindle motor 22, an f-ϑ lens 23, a cylinder mirror 24 and a start detection mirror 25.

An output beam of light source 1 is converged by the cylinder lens 20 and enters the polygon mirror 21 which is rotated by the spindle motor 22. The beam is then reflected by the polygon mirror and enters the f-ϑ lens 23. The scanning beam from the f-ϑ lens 23 takes a long light path, is then reflected by the cylinder mirror 24 for expanding the scanning width and then impinges the photosensitive drum 30 which provides the scanning surface.

The start detection mirror 25, which is arranged to reflect light when the scanning beam from the f-ϑ lens 23 is at the leftmost (as seen in Fig. 1) extreme of beam scanning width, is provided between the f-ϑ lens 23 and the cylinder mirror 24. The light reflected by the start detection mirror 25 is received by a photodetector (photodiode) 26 for start detection, and a scanning light detection circuit 27 generates a start detection signal BD which indicates start of a scanning, in response to reception of light at the photodetector.

However, a light source of a kind as mentioned above is subject to changes in the quantity of light in the output optical beam depending on ambient temperature and the conditions of light scanning means 2.

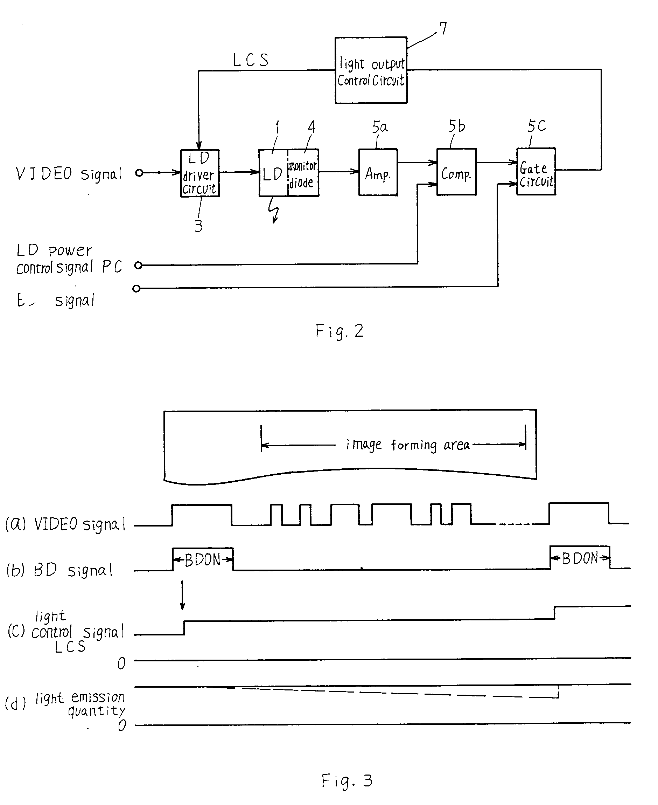

Fig. 2 is a block diagram indicating constitution of an arrangement for maintaining constant the quantity of light provided by light emission device at the commencements of scannings of the optical beam, and Fig. 3 shows waveforms for assistance in explaining operations of the arrangement of Fig. 2.

Explained hereunder is a case in which a semi conductor laser is used as the light emission device provided as the light source 1. As indicated in Fig. 2 and Fig. 3, the semiconductor laser 1 as the laser light source is driven by a (LD) driver in accordance with a video signal VIDEO.

The semiconductor laser 1 is provided with a monitor diode (photodetector) 4 which receives the light beam emitted by the laser, for the purpose of monitoring.

The output of monitor diode 4 is sampled for a selected portion of each scanning of the light beam (the same portion in each scanning) outside the image formation portion (image-forming area) of each scanning, and the drive current provided by driver 3 is set on the basis of sampled output.

That is, the output of the monitor diode 4 is amplified by an amplifier 5a. Thereafter, the output of amplifier 5a is compared, in a comparator 5b, with an LD power control signal PC which is adjusted and set previously for the purpose of obtaining a predetermined image concentration. The comparator 5b outputs "1" when the output of amplifier 5a is larger than the LD power control signal PC, and outputs "0" when the output of amplifier 5a is smaller than the LD power control signal PC. The output of the comparator 5b is sampled in the gate circuit 5c only for a period BDON (Fig. 3(b)), based on the start signal (BD signal). The output of comparator 5b is applied to a light output control circuit 7 through a gate circuit 5c. Thereby, the light output control circuit 7 changes driving current value (light control signal LCS of Fig. 3(c)) so as to reduce the light emission quantity of the output beam of the semiconductor laser 1 in a case in which the output of gate circuit 5c is "1", or so as to increase the light emission quantity in a case in which the output is "0". The light output control circuit 7 holds this driving current for one scanning period, to apply it to the driver 3.

With the constitution described, light output level of the semiconductor laser 1 can be maintained constant, as shown by a solid line of Fig. 3(d), even when ambient temperature changes.

However, when the semiconductor laser 1 is driven, for example, with the VIDEO signal shown in Fig. 3(a), the light quantity is gradually reduced, as indicated by a broken line in Fig. 3(d), due to the influence of heat generation at the junctions of the semiconductor laser 1.

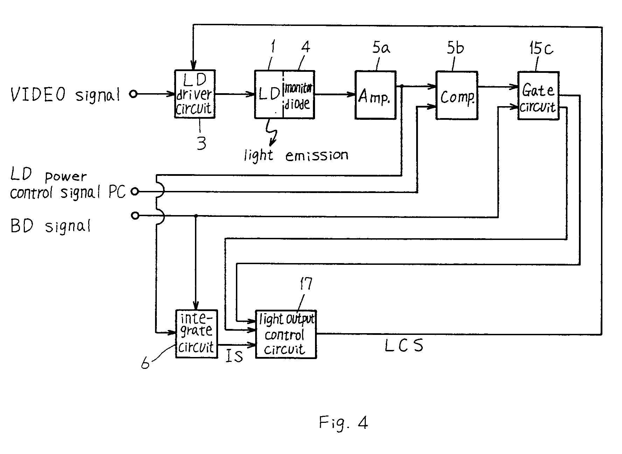

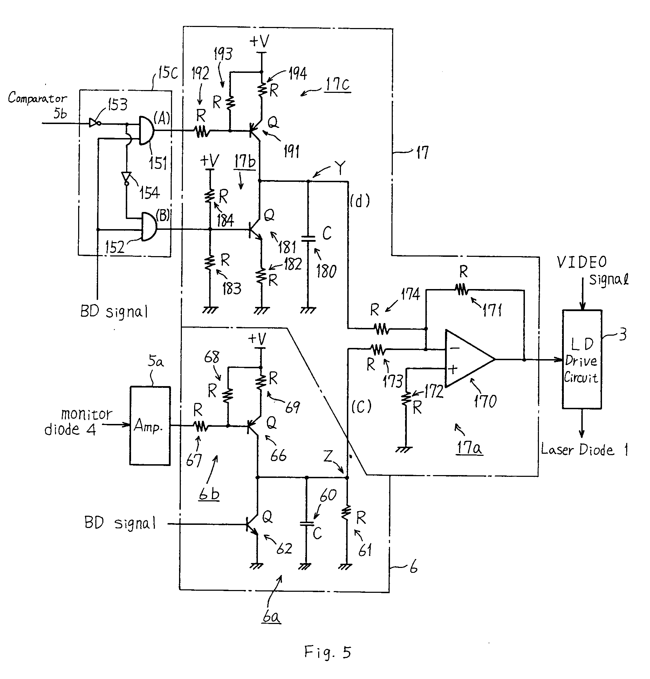

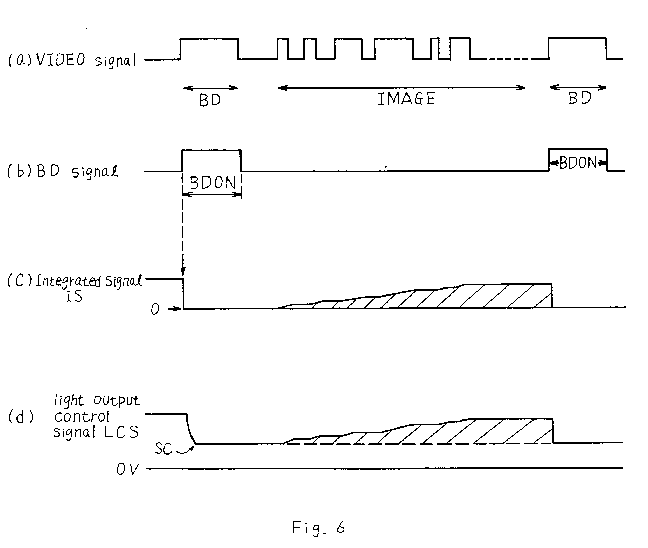

Fig. 4 is a schematic block diagram indicating the constitution of an embodiment of the present invention which provides for the light quantity of the optical beam to be kept constant during the period from the start to the end of a scanning of the optical beam. Fig. 5 illustrates detail circuit constitutions for a gate circuit, an integral circuit and a light output control circuit as shown in Fig. 4. Fig. 6 shows waveforms, for assistance in explaining operations in relation to Fig. 4 and Fig. 5.

In Figs. 4 and 5, items similar to those shown in Fig. 1 and Fig. 2 are designated by the similar reference signs. 15c is a gate circuit, 6 is an integral circuit and 17 a light output control circuit.

The semiconductor laser 1 is driven ON and OFF, in correspondence to video signal VIDEO, by LD driver 3. A driving current output when LD driver 3 is operated is controlled by light output control signal LCS.

The light emission level of semiconductor laser 1 is detected by monitor diode 4, comprised in the semiconductor laser 1, and is then converted to a current.

An output of monitor diode 4 is voltage-converted by the amplifier 5a and is compared with the level (reference level) of LD power control signal PC in comparator 5b.

The output level thereof controls the signal level of light output control circuit 17 only when the BD signal is high level (BDON). Namely, as described previously, when the light output signal of monitor diode 4 has a level lower than the reference level PC, the light output control circuit 17 provides an output for an increased light emission level, and when the output of monitor diode 4 is higher than the reference level PC, the light output control circuit 17 provides an output for a reduced light emission level.

Such control is carried out only when the BD signal is high level (BDON), and the light output signal level of monitor diode 4 is set to the same level as the reference level PC.

The LD power control signal PC is used for setting the concentration of printing (setting of light intensity of semiconductor laser 1) and it can be manually set by a switch on an operator panel provided for electrophotographic apparatus.

Simultaneously, the BD signal is discharged to OV at BDON in the integral circuit 6 and an (amplified) output of monitor diode 4 (from the amplifier 5a) is integrated.

Therefore, an output voltage of integral circuit 6 increases with the light emission period of semiconductor laser 1.

Namely, as shown in Fig. 5, an integral circuit 6a, formed by a capacitor 60 for signal voltage integration and a resistor 61 for setting a discharge current, discharges to OV when the high level BD signal (BDON) is applied to the base of a discharge transistor 62 provided in respect of capacitor 60 as shown in Fig. 6(b). Accordingly, this integral circuit 6a discharges to OV when the high level BD signal (BDON) is applied, at the beginning of each scanning (by the polygon mirror 21).

Thereafter, when the VIDEO signal as shown in Fig. 6(a) is applied to the LD driver, an output of the monitor diode 4 is applied, through the amplifier 5a, to a charging circuit 6b for charging the capacitor 60. The charging circuit 6b is formed by resistors 67, 68, 69, for setting charging current, and a transistor 66 for charging the capacitor 60.

Accordingly, as shown in Fig. 6(c), the capacitor 60 of integral circuit 6a is charged by the charging circuit 6b when the VIDEO signal is ON during a scanning period corresponding to the image-forming area of a scanning of the laser beam laser, and is discharged through the resistor 61 when the VIDEO signal is OFF. Thereby, the capacitor 60 holds a value which depends upon the duration of periods of timing for which the semiconductor laser 1 is driven, and a voltage depending on the charge held by the capacitor 60 appears at a terminal Z (Fig. 5) as shown in Fig. 6(c).

The light output control circuit 17 comprises an adder circuit 17a comprising an operational amplifier 170 for voltage addition, and resistors 171, 172, 173, 174 for setting an addition constant.

The adder circuit 17a adds the voltage appearing at the terminal Z and a voltage appearing at a terminal Y and applies an added output to the LD driver.

A holding voltage of a capacitor 180, storing the light output control voltage, appears at the terminal Y.

The capacitor 180 is discharged by a discharging circuit 17b comprising a transistor 181 and resistors 182, 183, 184 for setting discharge current. Moreover, this capacitor 180 is charged by a charging circuit 17c comprising a transistor 191 and resistors 192, 193, 194 for setting a charging current.

To the base of transistor 191 of this charging circuit 17c, an output of an AND circuit 151, comprised in the gate circuit 15c, is connected through resistor 192. In addition, to the base of transistor 182 of the discharge circuit 17b, an output of an AND circuit 152 comprised the gate circuit 15c, is connected.

To the one input terminal of the AND circuit 151, a signal obtained by inverting the output of comparator 5b (with and inverting circuit 153) is input, whilst the BD signal is input to the other input terminal.

Moreover, to one input terminal of the AND circuit 152, a signal obtained by inverting the output of the inverting circuit 153 (with an inverting circuit 154) is input, whilst the BD signal is input to the other input terminal.

Therefore, the AND circuit 151 outputs "1" only when the output of comparator 5b is "0" whilst the BD signal is BDON, and the charging circuit 17c charges the capacitor 180 only during this period.

Meanwhile, the AND circuit 152 outputs "1" only when an output of the comparator 5b is "1" whilst the BD signal is BDON, and the discharging circuit 17b discharges the capacitor 180 only during this period.

As can be understood from the above explanation, in the light output control circuit 17 the voltage held at capacitor 180 is reduced as a result of the effect of the discharging circuit 17b when an output of the monitor diode 4 amplified by the amplifier 5a is higher than the LD power control signal PC during the period where the BD signal is high level (BDON), and when an output of the monitor diode 4 amplified by the amplifier 5a is lower than the LD power control signal PC, the light output control circuit 17 increases the voltage held at the capacitor 180 as a result of the effect of the charging circuit 17c.

Thereby, as explained with reference to Fig. 2 and Fig. 3, light quantity can be kept to a constant following variation of ambient temperature.

Here, a voltage held at capacitor 180 and a voltage held at capacitor 60 in the integral circuit 6 are respectively input to the operational amplifier 170, through resistors 174, 173 for setting an addition constant, and added therein. With an output voltage of this adder circuit 17a, the driving current of LD driver 3 is set.

Accordingly, as shown in Fig. 6, the light output control signal LCS (Fig. 6(d)) has a format such that the integral signal IS (Fig. 6(c)) is added to the comparison output SC set for every scanning.

Namely, in a first non-image area, where the VIDEO signal is at an OFF level, the signal LCS is controlled to the level of LD power control signal PC and thereafter a VIDEO signal of ON level is provided which increases with light emission of the semiconductor laser 1.

Therefore, deterioration of light emission efficiency, due to heat generation at the junction of semiconductor laser 1, can be compensated by increasing driving current of the LD driver 3.

Namely, at the commencement of a scanning the reference light quantity preset in the period of BDON is assured and a light quantity compensated by the effect of the integral circuit is assured towards the end of a scanning and thereby substantially or almost the same light quantity can be maintained at both the commencement and towards the end of a scanning. Accordingly, uneven gray levels (concentration) are not generated in different parts of a scanning, in the electrophotographic apparatus comprising such an optical beam scanning device.

In the embodiment of the present invention described above, a semiconductor laser is used as the light source and the detection output of a monitor diode 4 is integrated.

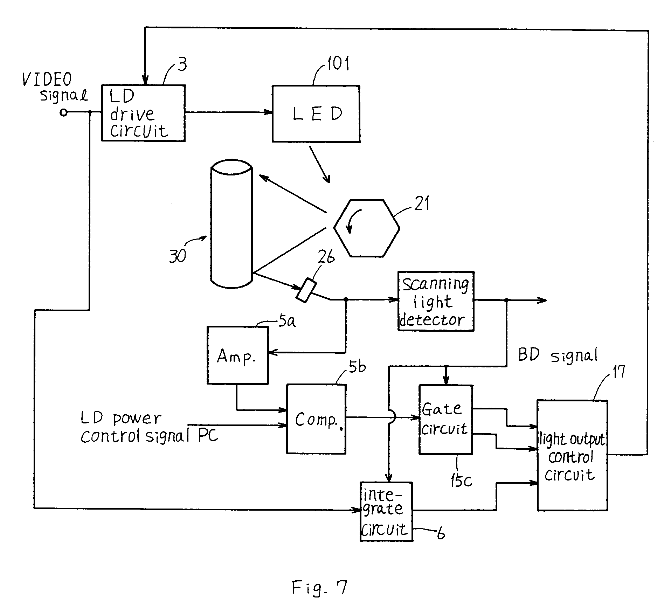

For example in an embodiment of the present invention in which a light emission diode (LED) 101 is used as the light source, a monitor diode may not be employed. As illustrated in Fig. 7, the quantity of light provided by LED 101 is effectively determined in the amplifier 5a by detecting the optical beam as reflected from the surface of photosensitive drum 30, using the photodetector 26 for start detection. Furthermore, the VIDEO signal applied to the LD driver 3 is input to the integral circuit 6.

The parts of the constitution of the embodiment of Fig. 7 are similar to those shown in Figs. 4 and 5.

With the constitutions described above, the light quantity can also be kept constant in the same way as the case where the LED 101 is used.

In a modification of the embodiment of Fig. 4, the VIDEO signal applied to the LD driver may be integrated, without integrating an output of the monitor diode 4.

As explained above, the amount of heat generated at the junction of a light emission device is, in effect, established or estimated by using an integral value obtained by integrating a VIDEO signal, and a driving current of a semiconductor laser is controlled by correcting the sampled comparison control signal. Therefore, deterioration of light emission efficiency due to heat generation at the junction of semiconductor laser, for example, can be compensated and optical scanning can be realised with an established light quantity.

Moreover, such effect can be achieved through control of driving current, and can therefore be attained easily and economically.

An embodiment of the present invention provides optical beam apparatus comprising a light emission device, a driver for driving the light emission device with an applied VIDEO signal, a means for estimating reduction in quantity of light emitted by the light emission device from the VIDEO signal applied, and a means for controlling the driver in accordance with the estimated reduction so that the quantity of light of the optical beam emitted by the light emission device is maintained (more nearly) constant.

An embodiment of the present invention provides an optical beam scanning apparatus comprising:-
(a) a light emission device;
(b) a means for driving said light emission device with the VIDEO signal;
(c) a light scanning device for scanning an optical beam from said light emission device;
(d) a photodetecting means for monitoring and receiving the light beam from said light emission device;
(e) a means for sampling the receiving output of said photodetecting means in the region other than the image-forming region and comparing said output with the reference level;
(f) an integral means for integrating the receiving output of said photodetecting means; and
(g) a means for controlling a driving current of said driving means based on the output of said comparison means and the output of said integral means.

The light emission device may be a semiconductor laser, or a light emission diode.

The light scanning device may comprise a rotary polygon mirror and the f-ϑ lens.

The integral means may be an integrated circuit.

An embodiment of the present invention provides an optical beam scanning apparatus comprising:-
(a) a light emission device;
(b) a means for driving said light emission device in accordance with the VIDEO signal;
(c) a means for estimating drop of quantity of light emitted from said light emission device from the driving mode of said driving means; and
(d) a means for giving, to said driving means, the driving signal for compensating for light quantity of said light emission device depending on the estimated result of said estimation means.

The light emission device may be a semiconductor laser, or a light emission diode.

The means for estimating may be an integrated circuit for integrating said VIDEO signal.

The apparatus may have a second control means for setting the driving current of said driving means so that the light quantity of optical beam at the starting point of scanning is the first value.

The estimation circuit may be an integral circuit for integrating said VIDEO signal; and said second control means may comprise a comparison means for comparing light quantity of optical beam with the reference value and a capacitor for converting a holding voltage in compliance with an output of said comparison means; and said first control means may be an adder circuit for adding the holding voltage of said integral circuit and the voltage of said capacitor.

The light emission device may be a semiconductor laser having a monitor diode.

The integral circuit may integrate the output of said monitor diode as said VIDEO signal.

## Claims

1. Optical beam scanning apparatus, comprising:-
(a) a light emission device (1, 101), operable to emit light for forming a light beam which is scanned in the apparatus,
(b) driving means (3), for applying a driving signal to the light emission device (1, 101) for driving that device to emit light in accordance with a control signal (VIDEO) in the course of scanning of the light beam,
(c) compensating means (6, 17), for applying to the driving means (3) a compensating signal for compensating for a decrease in the quantity of light emitted by the light emission device (1, 101) in response to similar levels of driving signal, so that the quantity of light emitted by the light emission device is compensated for such decrease;
characterised in that
the compensating means (6, 17) comprise:-
(d) means (6) for estimating the decrease in quantity of light emitted by the light emission device (1, 101), in response to similar levels of driving signal, arising as a consequence of the device being driven in accordance with the control signal (VIDEO) in the course of a scanning of the light beam, and
(e) means (17) for applying the compensating signal to the driving means (3) in dependence upon the estimation provided by the estimation means whilst the light emission device is being driven in accordance with the control signal in the course of the scanning of the light beam, thereby compensating continuously the quantity of light emitted by the light emission device for such decrease in the course of scanning of the light beam.

2. Apparatus as claimed in claim 1, wherein the estimation means comprise an integration circuit (6) operable to integrate the control signal (VIDEO).

3. Apparatus as claimed in claim 1, further comprising photodetecting means (4) operable for monitoring light emitted from the light emission device (1), wherein said estimation means comprises an integration circuit (6) operable to integrate an output of the photodetecting means.

4. Apparatus as claimed in claim 3, wherein the photodetecting means comprise a monitor diode (4).

5. Apparatus as claimed in any preceding claim, further comprising setting means (5a, 5b, 5c) operable, at the commencement of each scanning, to set a driving signal level, corresponding to a given control signal level, such that a set quantity of light is emitted in response to the given control signal level.

6. Apparatus as claimed in claim 5, wherein the control signal includes, in the course of each scanning, an image portion, for controlling light emission of the light emission device for the purpose of image formation, and a non-image portion for controlling light emission which is not used for image formation, and wherein the non-image portion of the control signal is employed for such setting of driving signal level.

7. Apparatus as claimed in claim 5 or 6, when read as appended to claims 3 or 4, wherein the output of the photodetecting means is detected by the said setting means (5a, 5b, 5c), and compared with a reference level corresponding to said set quantity of light.

8. Apparatus as claimed in any preceding claim, wherein the light emission device is a semiconductor laser.

9. Apparatus as claimed in claim 8, read as appended to claim 4, wherein the semiconductor laser comprises the said monitor diode (4).

10. Apparatus as claimed in any one of claims 1 to 7, wherein the light emission device is a light emission diode.

11. Apparatus as claimed in any preceding claim, further comprising a light scanning device having a rotary polygon mirror and an f-ϑ lens.

12. Apparatus as claimed in claim 2 or 3, or any of claims 4 to 11 read as appended to claim 2 or 3, wherein the integration circuit (6) employs a capacitor.

13. Apparatus as claimed in claim 12, read as appended to claim 7, wherein a capacitor is employed for holding a voltage determined in dependence upon the result of comparison with the reference level, which voltage is added to the voltage held in the capacitor of the integration circuit, for providing the driving signal.

## Patentansprüche

1. Optische Strahlabtastvorrichtung, umfassend:
(a) eine Lichtemissionseinrichtung (1, 101), die betätigbar ist, um Licht zur Bildung eines Lichtstrahls zu emittieren, der in der Vorrichtung abgetastet wird,
(b) eine Treibereinrichtung (3), um ein Treibersignal auf die Lichtemissionseinrichtung (1, 101) zu geben, um die Einrichtung anzusteuern, daß sie Licht gemäß einem Steuersignal (VIDEO) im Verlauf des Abtastens des Lichtstrahls aussendet,
(c) Kompensationseinrichtungen (6, 17), um auf die Treibereinrichtung (3) ein Kompensationssignal zum Kompensieren einer Abnahme der durch die Lichtemissionseinrichtung (1, 101) emittierten Lichtmenge in Reaktion auf ähnliche Pegel des Treibersignals zu geben, so daß die durch die Emissionseinrichtung emittierte Lichtmenge für eine derartige Abnahme kompensiert wird;
dadurch **gekennzeichnet,** daß
die Kompensationseinrichtungen (6, 17) umfassen
(d) eine Einrichtung (6) zum Schätzen der Abnahme der durch die Lichtemissionseinrichtungen (1, 101) emittierten Lichtmenge in Reaktion auf ähnliche Pegel des Treibersignals, die als Folge des Ansteuerns der Einrichtung gemäß dem Steuersignal (VIDEO) im Verlauf eines Abtastlaufs des Lichtstrahls vorkommen, und
(e) eine Einrichtung (17), um das Kompensationssignal auf die Treibereinrichtung (3) abhängig von der durch die Schätzeinrichtung gelieferten Schätzung zu geben, während die Lichtemissionseinrichtung gemäß dem Steuersignal im Verlauf des Abtastlaufs des Lichtstrahls angesteuert wird, wodurch die durch die Lichtemissionseinrichtung emittierte Lichtmenge fortlaufend für eine solche Abnahme im Verlauf des Abtastlaufs des Lichtstrahls kompensiert wird.

2. Vorrichtung nach Anspruch 1, bei der die Schätzeinrichtungen einen Integrationskreis umfassen, der betätigbar ist, um das Steuersignal (VIDEO) zu integrieren.

3. Vorrichtung nach Anspruch 1, weiter umfassend eine Fotodetektoreinrichtung (4), die betätigbar ist, um das von der Lichtemissionseinrichtung (1) emittierte Licht zu überwachen, wobei die Schätzeinrichtung einen Integrationskreis (6) umfaßt, der betätigbar ist, um ein Ausgangssignal der Fotodetektoreinrichtung zu integrieren.

4. Vorrichtung nach Anspruch 3, bei der die Fotodetektoreinrichtungen eine Überwachungsdiode (4) umfassen.

5. Vorrichtung nach einem beliebigen vorhergehenden Anspruch, weiter umfassend eine Einstelleinrichtung (5a, 5b, 5c), die am Anfang jedes Abtastlaufs betätigbar ist, um einen Treibersignalpegel entsprechend einem gegebenen Steuersignalpegel einzustellen, derart, daß eine eingestellte Lichtmenge in Reaktion auf den gegebenen Steuersignalpegel emittiert wird.

6. Vorrichtung nach Anspruch 5, bei der das Steuersignal im Verlauf jedes Abtastlaufs einen Bildabschnitt, um die Lichtemission der Lichtemissionseinrichtung zwecks Bildformung zu steuern, und einen Nichtbild-Abschnitt enthält, um die Lichtemission zu steuern, die für die Bildformung nicht verwendet wird, und wobei der Nichtbild-Abschnitt des Steuersignals für eine solche Einstellung des Treibersignalpegels verwendet wird.

7. Vorrichtung nach Anspruch 5 oder 6, wenn gelesen als angefügt an Ansprüche 3 oder 4, bei der das Ausgangssignal der Fotodetektoreinrichtung durch die Einstelleinrichtung (5a, 5b, 5c) detektiert und mit einem Referenzpegel entsprechend der eingestellten Lichtmenge verglichen wird.

8. Vorrichtung nach einem beliebigen vorhergehenden Anspruch, bei der die Lichtemissionseinrichtung ein Halbleiterlaser ist.

9. Vorrichtung nach Anspruch 8, gelesen als angefügt an Anspruch 4, wobei der Halbleiterlaser die Überwachungsdiode (4) umfaßt.

10. Vorrichtung nach einem beliebigen der Ansprüche 1 bis 7, bei der die Lichtemissionseinrichtung eine Lumineszenzdiode ist.

11. Vorrichtung nach einem beliebigen vorhergehenden Anspruch, weiter umfassend eine Lichtabtastvorrichtung, aufweisend einen polygonen Drehspiegel und eine f-Θ-Linse.

12. Vorrichtung nach Anspruch 2 oder 3 oder einem beliebigen der Ansprüche 4 bis 11, gelesen als angefügt an Anspruch 2 oder 3, bei der der Integrationskreis (6) einen Kondensator verwendet.

13. Vorrichtung nach Anspruch 12, gelesen als angefügt an Anspruch 7, bei der ein Kondensator verwendet wird, um eine abhängig von dem Ergebnis des Vergleichs mit dem Referenzpegel bestimmte Spannung zu halten, welche Spannung zu der im Kondensator des Integrationskreises gehaltenen Spannung addiert wird, um das Treibersignal zu liefern.

## Revendications

1. Appareil de balayage à faisceau optique, comprenant :
(a) un appareil d'émission lumineuse (1, 101) destiné à émettre de la lumière pour la formation d'un faisceau lumineux assurant le balayage dans l'appareil,
(b) un dispositif de pilotage (3) destiné à appliquer un signal de pilotage à l'appareil d'émission lumineuse (1, 101) pour le pilotage de cet appareil afin qu'il émette de la lumière en fonction d'un signal de commande (VIDEO) au cours du balayage du faisceau lumineux,
(c) un dispositif de compensation (6, 17) destiné à appliquer au dispositif de pilotage (3) un signal de compensation de la réduction de la quantité de lumière émise par l'appareil d'émission lumineuse (1, 101) en fonction de niveaux analogues du signal de pilotage, afin que la quantité de lumière émise par l'appareil d'émission lumineuse ait subi une compensation de cette réduction,
caractérisé en ce que :
le dispositif de compensation (6, 17) comporte :
(d) un dispositif (6) d'estimation de la réduction de la quantité de lumière émise par l'appareil d'émission lumineuse (1, 101), pour des niveaux semblables du signal de pilotage, apparaissant parce que l'appareil est piloté en fonction du signal de commande (VIDEO) pendant le balayage du faisceau lumineux, et
(e) un dispositif (17) destiné à appliquer le signal de compensation au dispositif de pilotage (3) en fonction de l'estimation donnée par le dispositif d'estimation alors que l'appareil d'émission lumineuse est piloté d'après le signal de commande au cours du balayage du faisceau lumineux, si bien que la quantité de lumière émise par l'appareil d'émission lumineuse subit constamment la compensation de cette réduction au cours du balayage du faisceau lumineux.

2. Appareil selon la revendication 1, dans lequel le dispositif d'estimation comprend un circuit d'intégration (6) destiné à intégrer le signal de commande (VIDEO).

3. Appareil selon la revendication 1, comprenant en outre un dispositif photodétecteur (4) destiné à contrôler la lumière émise par l'appareil d'émission de lumière (1), et le dispositif d'estimation est un circuit d'intégration (6) destiné à intégrer un signal de sortie du dispositif photodétecteur.

4. Appareil selon la revendication 3, dans lequel le dispositif photodétecteur est une diode de contrôle (4).

5. Appareil selon l'une quelconque des revendications précédentes, comprenant en outre un dispositif (5a, 5b, 5c) de réglage qui est destiné, au début de chaque balayage, à régler un niveau de signal de pilotage correspondant à un niveau donné de signal de commande, afin qu'une quantité réglée de lumière soit émise en fonction du niveau donné du signal de commande.

6. Appareil selon la revendication 5, dans lequel le signal de commande comprend, au cours de chaque balayage, une partie d'image, destinée à régler l'émission lumineuse de l'appareil d'émission lumineuse utilisée pour la formation de l'image, et une partie sans image destinée à régler l'émission lumineuse qui n'est pas utilisée pour la formation de l'image, et dans lequel la partie sans image du signal de commande est utilisée pour le réglage du niveau du signal de pilotage.

7. Appareil selon la revendication 5 ou 6, dépendant de la revendication 3 ou 4, dans lequel le signal de sortie du dispositif photodétecteur est détecté par le dispositif de réglage (5a, 5b, 5c) et est comparé à un niveau de référence qui correspond à la quantité réglée de lumière.

8. Appareil selon l'une quelconque des revendications précédentes, dans lequel l'appareil d'émission de lumière est un laser à semi-conducteur.

9. Appareil selon la revendication 8, dépendant de la revendication 4, dans lequel le laser à semi-conducteur est la diode de contrôle (4).

10. Appareil selon l'une quelconque des revendications 1 à 7, dans lequel l'appareil d'émission lumineuse est une diode photoémissive.

11. Appareil selon l'une quelconque des revendications précédentes, comprenant en outre un appareil de balayage de lumière ayant un miroir polygonal rotatif et une lentille f-ϑ.

12. Appareil selon la revendication 2 ou 3 ou l'une quelconque des revendications 4 à 11 dépendant de la revendication 2 ou 3, dans lequel le circuit d'intégration (6) comporte un condensateur.

13. Appareil selon la revendication 12, dépendant de la revendication 7, dans lequel un condensateur est utilisé pour la conservation d'une tension déterminée d'après le résultat de la comparaison du niveau de référence, cette tension étant ajoutée à la tension conservée dans le condensateur du circuit d'intégration afin qu'elle donne le signal de pilotage.
